# EUROPEAN PATENT SPECIFICATION

(11) **EP 1 766 272 B1**
(45) Date of publication and mention of the grant of the patent: **15.07.2009**
(21) Application number: 05744563.7
(22) Date of filing: 16.05.2005
(51) Int. Cl.: F16K 1/52, G01F 1/26, G01F 1/28, G01K 17/14

(54) **DEVICE TO INTERCEPT A FLUID**
VORRICHTUNG ZUM ABFANGEN EINES FLUIDS
DISPOSITIF D'INTERCEPTION D'UN FLUIDE

(30) Priority: 17.05.2004 IT UD20040100; 10.11.2004 IT UD20040209
(43) Date of publication of application: 28.03.2007
(73) Proprietor: Emmeti S.p.A., 31100 Treviso (IT)
(72) Inventor: VISENTIN, Eros, I-33080 Porcia (IT)
(74) Representative: Petraz, Gilberto Luigi
(86) International application number: PCT/EP2005/005327
(87) International publication number: WO 2005/111479

(56) References cited:
- WO-A-03/089844
- DE-A1- 10 049 129
- DE-A1- 10 255 522
- DE-B1- 1 550 246
- DE-U1- 20 215 742

## Description

### FIELD OF THE INVENTION

The present invention concerns a device to intercept a fluid, such as for example a valve, a tap or suchlike, in order to regulate and/or possibly measure and display the flow rate thereof.

The device according to the invention comprises, in one version, an indicator visible from the outside which, in cooperation with a graduated scale, indicates in real time to the user the flow rate of the fluid passing inside a pipe.

### BACKGROUND OF THE INVENTION

Devices are known, which intercept a fluid passing inside a pipe, used for example along a circuit to feed radiators in correspondence with the relative offtakes. Such known devices comprise a regulation screw inserted into the pipe substantially perpendicularly to the longitudinal axis thereof; the screw is normally screwed onto one or two threaded bushings, or joins, provided in correspondence with the opposite walls of the pipe.

The regulation screw is provided with holes, able to be opened or closed according to the extent that the regulation screw is screwed into the joins, to allow a controlled passage of the fluid from the pipe to the offtake.

Conventional interception devices thus consist substantially of two elements which, when they are screwed, allow to perform only an empirical regulation of the flow rate of the fluid.

Interception devices are also known, for example from the world patent application WO-A-03/089844 and the German patent applications DE-A-10255522 and DE-A-10049129, which allow both to regulate and also to measure and display the flow rate of the fluid.

Such conventional interception devices commonly provide a measuring plunger inserted through inside the regulation screw, the movement of which is contrasted by elastic means. A transparent cover, provided with a graduated scale, is associated with the upper part or head of the regulation screw, in a position visible from the outside. The graduated scale serves to verify the value of the flow rate of the fluid diverted to the offtake.

By screwing and/or unscrewing the regulation screw with respect to the joins, the gap of the transit holes is modified; in this way the flow rate of the fluid diverted to the offtake is regulated and the value is visible on the graduated scale of the cover.

This occurs because the upper end of the plunger extends inside the transparent cover and is provided with an indicator element, while its lower end, shaped like a platelet, is immersed in the fluid; therefore, the plunger receives from the fluid an axial thrust proportional to the flow and direction of the fluid inside the regulation screw, and hence the indicator is displaced axially upwards or downwards with respect to the graduated scale in order to signal the flow rate of the fluid delivered to the offtake.

A first disadvantage of known devices of this type is that, every time that it becomes necessary to remove parts of the regulation device, for example the cover or the plunger, it is necessary to release their constraint to the regulation screw, which entails the loss of the calibration values adopted during the assembly step. This is a particularly serious problem since the water that is drawn, or the condensation that is formed, inside the cover form deposits of dirt that become fixed on its parts and compromise the visibility of the measurement values from outside. This requires frequent cleaning and restoration operations which, due to the loss of calibration, entail the need for the intervention of specialized technicians and, in any case, also long delays in order to return to pre-existing functioning conditions.

Another disadvantage of known devices is that it is not possible to regulate, with certain repeatability, a maximum opening of the holes, different from the maximum physical size of the same, for example in order to limit to a desired bottom-of-the-scale value the maximum flow rate of fluid that can pass inside the regulation screw.

Yet another disadvantage is that it is possible that a certain part of water may be drawn inside the screw, and hence into the sliding seating of the plunger, creating risks of leakage of the water when the transparent cover is removed and/or increasing the rapidity of formation of deposits of dirt on the walls of the cover.

Moreover, the two types of device, with and without measurement and display on the graduated scale, are conceived as different products, without parts in common, with assembly elements not shared and not interchangeable.

Therefore, in an already existing installation, if it is desired to change, for example, from the device with a simple empirical regulation to the more evolved device with measurement and display of the flow rate, it is necessary to replace the whole device, requiring the intervention of specialized technicians and, in any case, a long time to restore functioning.

Moreover, in these cases it is often necessary to completely close the hydraulic plant, isolating the zone affected by the replacement, with obvious problems in times and costs of the intervention.

One purpose of the present invention is to achieve a device to intercept a fluid that will allow to remove parts subject to wear and deterioration of the device, in particular the transparent cover, without modifying the regulation calibration adopted during the assembly step.

Another purpose of the invention is to allow to define, in a univocal and repeatable manner, a desired value of maximum opening of the holes that transmit the fluid, in order to define a desired maximum flow rate that can be delivered to the offtake.

Yet another purpose of the invention is to ensure a perfect seal of the device in every working condition of said device.

Another purpose of the present invention is to be able to selectively configure the device, simply and quickly, at least between two different conditions, for example a first condition simply for regulation, and a second condition for regulation, measurement and possibly to display the measurement.

The Applicant has devised, tested and embodied this invention to overcome the shortcomings of the state of the art and to obtain these and other purposes and advantages.

### SUMMARY OF THE INVENTION

The present invention is set forth and characterized in the main claim, while the dependent claims describe other characteristics of the invention or variants to the main inventive idea.

A device to regulate the flow rate of a fluid according to the present invention is used along a pipe in correspondence with a join of an offtake, in order to divert thereto a desired quantity of the fluid.

The device comprises:
- a bushing screwed to the pipe, with an axis substantially perpendicular to the axis of the latter; and
- a regulation screw arranged coaxial to the bushing;

According to a characteristic of the present invention, in an intermediate position between the bushing and the regulation screw a threaded sleeve is provided, having radial holes for the passage of the fluid, a first outer threading with which it is able to be selectively screwed to the bushing, and a second inner threading, of a standardized type, in which the regulation screw is selectively able to be screwed.

According to the invention, the presence of the threaded sleeve located between the bushing and the regulation screw allows to make the screwing of the sleeve to the bushing independent from the reciprocal screwing of the sleeve and other parts of the device associated inside it, such as the regulation screw, or others.

In this way, it is possible to remove parts of the device while keeping unchanged the regulation calibration set, for example, during the first assembly, that is, in the course of a modification carried out by an installation technician, independently regulating the axial position of the regulation screw by screwing it with respect to the threaded sleeve and consequently modifying the transit gap of the holes present in the threaded sleeve.

The inner threading of the sleeve allows in fact to regulate, in a repeatable and univocal manner, the maximum opening of the holes that allow the passage of fluid inside the device. This allows to carry out the regulation of the maximum flow rate to a value that is not limited by the size of the holes of the threaded sleeve.

According to another embodiment of the present invention, in correspondence with the opposite side of the pipe with respect to the bushing, the threaded sleeve couples axially with a tube, provided with lateral holes from which, when the offtake is open, the fluid taken from the main pipe, to be diverted to the offtake, emerges. The tube is solidly attached to the pipe and extends for a certain segment inside the pipe.

According to the invention, when the device is in the open condition, that is, with the transit holes of the threaded sleeve open, the fluid transits normally inside the threaded sleeve and emerges through the lateral holes present in the tube, so as to be directed into the offtake.

When the device is in the closed condition, that is, with the transit holes of the threaded sleeve closed, the relative position of the threaded sleeve and the tube causes the upper edge of the tube to act as an abutment, possibly with a certain pressure, against an annular packing attached to the bushing and arranged, on the pipe, opposite the part of the pipe to which the tube is attached.

In a preferential embodiment, the front edge of the threaded sleeve acts in abutment against an annular packing arranged on the bottom of the tube. This configuration creates a perfect watertight seal which prevents every possible drawing of the fluid to internal parts of the device, and allows to remove parts of the device without risks of water leaking outside the device.

Advantageously, the threaded sleeve axially has a through seating in which the second threading is made so as to selectively and alternately accommodate either a regulation screw of a first type, or a regulation screw of a second type.

The regulation screw of the first type is configured, for example, to cooperate with a screwing tool, by means of which the flow of fluid diverted into the offtake can be regulated only; the regulation screw of the second type is configured to regulate, measure and display to the outside the value of the flow rate of the fluid diverted into the offtake.

In this embodiment, the removal of the interchangeable regulation screws from the standard threaded sleeve does not require the hydraulic circuit to be interrupted, since the threaded sleeve by itself isolates the zone affected by the replacement.

This interchangeability allows, on a practical level, to modify the functionality of the device, even at a later time, simply by replacing the regulation screw of a first type by one of the second type; on a production level, the number of components is reduced since most of them are shared by the two types of device.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a three-dimensional, partly exploded view of the interception device according to the present invention in a first configuration;
- fig. 2 is a three-dimensional, partly exploded view of the interception device according to the present invention in a second configuration;
- fig. 3 shows a longitudinal section of the device in fig. 1;
- figs. 4, 5 and 6 show a longitudinal section of the interception device in fig. 2 in three different operating conditions.

### DETAILED DESCRIPTION OF A PREFERENTIAL FORM OF EMBODIMENT

With reference to the attached drawings, a device 10 to intercept a fluid according to the present invention is assembled on a pipe 11 of a hydraulic plant, in correspondence with a join of an offtake 12, in order to divert the flow of a fluid in a controlled manner. The plant may be, for example, of the type to feed the radiators in a heating plant.

The device 10 is attached on two opposite walls of the pipe 11; on one side it is screwed onto a bushing 13 solid with the pipe 11, and on the opposite side it is inserted into a tube 21, solid with the offtake 12. The structure and function of the tube 21 will be described in detail later.

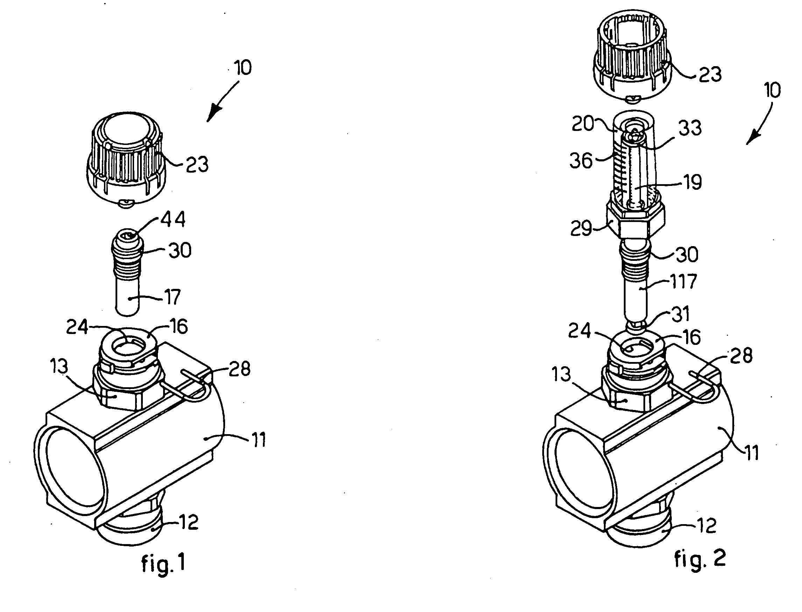

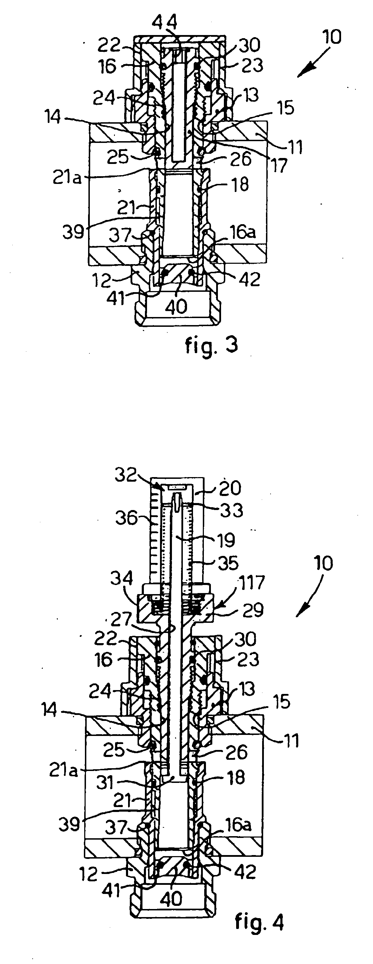

The interception device 10 comprises, arranged substantially coaxial with each other, from outside to inside, a threaded sleeve 16, a regulation screw 17 and a measuring plunger 19. Outside the pipe 11, on the upper end of the regulation screw which, in this case, can be selectively either of a first type, indicated generally by the reference number 17 in figs. 1 and 3, or of a second type, indicated generally by the reference number 117 in figs. 2, 4, 5 and 6.

The threaded sleeve 16, substantially cylindrical in shape, comprises an outer threading 15 that allows it to be screwed coaxially to the bushing 13, and is hollow inside, so as to define a through seating 14 provided, in an inner part, with a standardized threading 24 on which either the regulation screw 17, or alternatively the regulation screw 117, can be screwed.

The threaded sleeve 16 comprises, in a segment arranged outside the pipe 11 and of the bushing 13, a grooved surface 22 on which a clamping ring-nut 23 which, in the case of figs. 1 and 3, covers the regulation screw 17 and keeps it inside the threaded sleeve 16, whereas, in the case of figs. 2 and 4, it constrains the regulation screw 117 after regulation has been completed.

Advantageously, the clamping ring-nut 23 comprises snap-in attachment means, of a conventional type and not shown in detail.

The threaded sleeve 16 also comprises, in a position that always remains inside the pipe 11, a first 18 and a second 25 circular sealing packing, or O-ring.

On the body of the threaded sleeve 16 radial holes 26 are also made, able to allow the water to pass from the pipe 11 to the through seating 14 and from here to the join of an offtake 12.

The tube 21 has a sliding seating 39 in which the terminal part of the threaded sleeve 16 slides, and a head wall 40 facing towards the join of the offtake 12. To be more exact, the head wall 40 comprises a sealing packing or O-ring 42, and on the periphery a plurality of radial holes 41 able to allow the water to pass from the through seating 14 of the threaded sleeve 16 to the join of the offtake 12.

By screwing or unscrewing the threaded sleeve 16 with respect to the bushing 13, the position of the radial holes 26 with respect to the tube 21 is modified, and it is thus possible to regulate the amplitude of the opening gap and hence the flow rate of the water passing inside the join of the offtake 12.

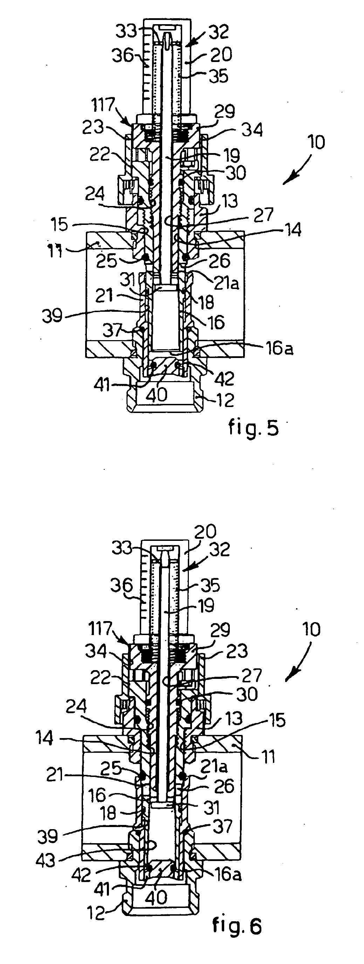

When the threaded sleeve 16 is taken to its end-of-travel position (fig. 6), the radial holes 26 are arranged completely inside the tube 21; in this position an upper edge 21a of the tube 21 rests with a determinate pressure against the 0-ring 25 arranged on the outside of the sleeve 16, and moreover a front edge 16a of the sleeve 16 acts against the O-ring 42 present inside the head of the tube 21. In this way, the device 10 is in a closed position and its inside is perfectly sealed with respect to the fluid flowing in the pipe 11, forming a perfectly watertight chamber 43 which isolates the zone affected by the replacement of the screws 17 or 117.

The formation of the watertight chamber 43 thus allows to replace the screw 17 with the screw 117, or vice versa, without having to interrupt the flow of fluid in the pipe 11, and without the risk that said fluid might leak from the interception device 10, even if the screws 17 or 117 are completely absent.

In both cases shown in the drawings, the screw 17 or the screw 117 is screwed to the standardized threading 24 of the threaded sleeve 16 and comprises a sealing packing or O-ring 30, cooperating with the through seating 14 of the sleeve 16, so as to prevent the water passing in the pipe 11 to leak from the device 10. The screwing or unscrewing of the regulation screws 17, 117 in practice entails the regulation of the maximum opening of the radial holes 26. In fact, the axial displacement of the screw 17 or 117 with respect to the threaded sleeve 16 determines a greater or lesser interference of the lower end of the screw 17, 117 with the holes 26, modifying the value of the transit gap. In this way it is possible to determine a maximum bottom-of-the-scale value of the flow rate of the water passing inside the through seating 14.

The device 10 also comprises a U-shaped rod 28, able to be associated transversely to the threaded sleeve 16, and able to cooperate with the through seating 14, to function as an end-of-travel element above the regulation screw 17, 117, so as to prevent them from accidentally coming out of the sleeve 16. This element is easily removed and repositioned, every time the screw 17 is exchanged for the screw 117 and vice versa.

In the embodiment shown in figs. 1 and 3, a first type of regulation screw 17 is associated with the threaded sleeve 16, able only to regulate the flow rate of the fluid passing in the pipe.

The regulation screw 17 is substantially cylindrical in shape and has, at an upper end, a hexagonal hollow 44 which allows to accommodate a tool, such as for example an Allen wrench, to perform the screwing or unscrewing with respect to the standardized threading 24.

Instead of the hexagonal hollow 44, any type of seating may be provided, according to the type of screwing tool used to screw/unscrew the screw 17.

In this embodiment, screwing or unscrewing the screw 17 with respect to the sleeve 16 determines the opening or closing of the holes 26, empirically establishing the maximum bottom-of-the-scale value of the flow rate of the water.

In the embodiment shown in figs. 2, 4, 5 and 6, a second type of regulation screw 117 is associated with the threaded sleeve 16, which regulates, measures and allows the flow rate of the fluid diverted into the offtake join to be seen from the outside.

In this case, a measuring plunger 19 and a transparent cover 20 are associated with the regulation screw 117. The cover 20 is mounted outside the pipe 11, on the upper end of the regulation screw 117, and the upper part of the measuring plunger 19 extends inside it.

The regulation screw 117 comprises an axial seating 27 for the measuring plunger 19 to slide, and a calibration head 29 which extends outside the threaded sleeve 16, and to which the transparent cover 20 is attached. The calibration head 29 also comprises an outer surface 34 shaped so as to cooperate selectively with part of the inner surface of the clamping ring-nut 23. In this way, the clamping ring-nut 23 allows to constrain the threaded sleeve 16 to the regulation screw 117 in a defined angular position.

It is obvious that, due to structural necessity, the ring-nut 23 in this case is open at the upper part, compared with the previous case in which it is blind, in order to allow the calibration head 29 and the cover 20 to be accommodated.

The measuring plunger 19 has an elongated shape, and comprises a lower end conformed as a platelet 31, while there is an indicator 32 on its upper end which is arranged inside the transparent cover 20.

The platelet 31 is substantially cylindrical in shape, or like a truncated cone, and is immersed in the water passing inside the through seating 14, so that the flow in transit causes a displacement, normally downwards, of the measuring plunger 19 proportional to the flow rate of the water diverted to the offtake 12.

To be more exact, the indicator 32 comprises a disk 33, advantageously colored. Between the disk 33 and the upper surface of the calibration head 29 a helical spring 35 is arranged, able to contrast the thrust exerted by the flow on the measuring plunger 19 and to return it to an inactive position when the device 10 is taken to the closed position.

The cover 20 in this case is screwed to the calibration head 29 and a graduated scale 36 is made on its surface. In this way, by sighting the disk 33 with respect to the graduated scale 36, it is possible to detect the value of the flow rate diverted to the offtake 12 according to the flow acting on the platelet 31 of the measuring plunger 19.

According to a variant not shown here, the transparent cover 20 is attached in bayonet manner, or with any other known system, to the regulation screw 117. The tube 21 is inserted coaxially and in watertight manner, by means of a sealing packing or 0-ring 37, to the join of the offtake 12.

In an initial condition (fig. 4), the threaded sleeve 16 is screwed to the bushing 13, so that its radial holes 26 are outside the tube 21, thus allowing the full flow of water to be diverted to the offtake 12. In this initial condition, the clamping ring-nut 23 is in its lowered position, so as to allow the regulation screw 117 to be screwed or unscrewed on the standardized threading 24 of the threaded sleeve 16.

This screwing/unscrewing of the regulation screw 117, in practice, entails the regulation of the maximum opening of the radial holes 26. In fact, the axial displacement of the regulation screw 117 with respect to the threaded sleeve 16 determines a greater or lesser interference of the lower end of the regulation screw 117 with the holes 26, modifying the value of their free transit gap. In this way, a maximum bottom-of-the-scale value of the flow rate of the water passing inside the through seating 14 can be determined.

Once this calibration has been effected, the clamping ring-nut 23 is raised (fig. 5), so as to allow it to be clamped on the outer surface 34 of the calibration head 29. In this way, the regulation screw 117 and the sleeve 16 are constrained together and the maximum value set for the opening of the radial holes 26 remains fixed, and hence univocal and repeatable, even when some of its components are removed, or when the regulation device 10 is opened or closed, by screwing or unscrewing the sleeve 16 with respect to the bushing 13 on the outer threading 15.

Should it become necessary to clean the transparent cover 20, the device is taken to the closed position, acting on the clamping ring-nut 23 until the front edge 16a of the threaded sleeve 16 is taken into cooperation with the O-ring 42, and the front edge 21a of the tube 21 is in abutment with the O-ring 25, thus defining the sealed chamber 43.

In this condition, the screw 117 is axially clamped with respect to the threaded sleeve 16, and it is therefore possible to remove the transparent cover 20 in order to clean or replace it, without running the risk of losing the calibration performed before, and without risk of accidental leakages of water due to water losses and infiltrations along the axis of the plunger 19.

It is clear, however, that modifications and/or additions of parts may be made to the device 10 as described heretofore, without departing from the field and scope of the present invention.

For example, it comes within the field of the present invention to provide that instead of the clamping ring-nut 23 a pin or attachment tooth can be provided, or other element suitable to clamp the regulation screw 17, 117 angularly to the sleeve 16. The radial holes 26 can be made on the tube 21, instead of on the threaded sleeve 16 which, in this case, acts as a stopper.

It is also clear that, although the present invention has been described with reference to specific examples, a person of skill in the art shall certainly be able to achieve many other equivalent forms of interception device, having the characteristics as set forth in the claims, and hence all coming within the field of protection defined thereby.

## Claims

1. Device to intercept a fluid, used along a pipe (11) in correspondence with a join of an offtake (12) in order to divert therein a desired quantity of fluid, comprising at least:
- a bushing (13) screwed to said pipe (11); and
- a regulation screw (17, 117) coaxial to said bushing (13);
**characterized in that**, in an intermediate position between said bushing (13) and said regulation screw (17, 117) a threaded sleeve (16) is provided, including radial holes for the passage of the fluid, a first outer threading (15) with which it is able to be screwed to said bushing (13), and a second inner threading (24), of the standardized type, in which said regulation screw (17, 117) is able to be screwed.

2. Device as in claim 1, **characterized in that** it comprises clamping means (23) mounted outside said threaded sleeve (16) and able to be selectively displaced between a first position, wherein they allow the angular movement of said regulation screw (17, 117) with respect to said threaded sleeve (16), and a second clamping position wherein they clamp said regulation screw (17, 117) angularly to said threaded sleeve (16).

3. Device as in claim 1 or 2, **characterized in that** it also comprises a tube (21) arranged in cooperation with one end of said threaded sleeve (16), said tube (21) having an edge (21a) that extends inside said pipe (11) and able to be arranged in abutment against a sealing element (25) arranged on the outside of said threaded sleeve (16) when said threaded sleeve (16) is taken to a closed position of the join of the offtake (12).

4. Device as in claim 3, **characterized in that** said tube (21) has, inside, a sealing element (42) against which the terminal end (16a) of said threaded sleeve (16) acts in abutment when it is taken into a closed position of said join of the offtake (12).

5. Device as in claim 3, **characterized in that** said tube (21) includes radial holes (41) able to allow said fluid to pass towards said join of the offtake (12).

6. Device as in any claim hereinbefore, **characterized in that** said threaded sleeve (16) axially includes a through seating (14) including said second threading (24), and is able to selectively accommodate either a first type of regulation screw (17), configured to cooperate with a screwing tool only to regulate the flow of fluid diverted into the offtake (12), or a second type of regulation screw (117), configured to regulate and measure the flow of fluid diverted into the offtake (12).

7. Device as in claim 6, **characterized in that** said threaded sleeve (16) is able to remain mounted on said bushing (13) during the replacement of said first type of screw (17) and said second type of screw (117), and to isolate along said pipe (11) the zone affected by the replacement of said first type of screw (17) and said second type of screw (117).

8. Device as in claim 6 or 7, **characterized in that** said first type of regulation screw (17) is substantially cylindrical in shape and comprises, at an upper end, a housing seating (44) for a screwing tool.

9. Device as in claim 6 or 7, **characterized in that** said second type of regulation screw (117) comprises a plunger arranged able to slide inside it and including a lower end conformed as a platelet (31), actuated by the flow of the fluid, and an upper end including an indicator (32), and a transparent cover (20), visible from outside said pipe (11), inside which said indicator (32) associated with said plunger (19) extends, and provided with a graduated scale (36) to detect the value of the flow of fluid diverted into the offtake (12).

10. Device as in any claim from 6 to 9 inclusive, **characterized in that** it also comprises an upper end-of-travel element (28) able to be associated transversely with said threaded sleeve (16) in order to cooperate with said through seating (14), and limit at the upper part the movement of the regulation screws (17, 117).

11. Device as in claim 9, **characterized in that** said regulation screw (117) comprises an axial seating (27) in which said plunger (19) slides, and a calibration head (29) arranged outside said threaded sleeve (16), and to which said transparent cover (20) is removably attached.

12. Device as in claim 11, **characterized in that** said calibration head (29) comprises an outer surface (34) shaped so as to cooperate with part of the inner surface of said selective clamping means (23).

13. Device as in claim 2, **characterized in that** said threaded sleeve (16) comprises, in a segment thereof arranged outside said pipe (11) a grooved surface (22) on which said selective clamping means (23) are able to slide axially.

## Patentansprüche

1. Vorrichtung zum Abgreifen eines Fluids, zur Verwendung an einer Leitung (11) beim Anschluß einer Ableitung (12), um eine gewünschte Fluidmenge zu dieser abzuleiten, aufweisend:
eine an die Leitung (11) angeschraubte Buchse (13) und
eine zur Buchse (13) koaxiale Regulierschraube (17, 117),
**dadurch gekennzeichnet, daß** an einem Zwischenort zwischen der Buchse (13) und der Regulierschraube (17, 117) eine Gewindehülse (16) vorgesehen ist, die radiale Öffnungen zum Durchtritt des Fluids, ein erstes Außengewinde (15), mit dem sie an der Buchse (13) angeschraubt werden kann, und ein standardisiertes zweites Innengewinde (24), in das die Regulierschraube (17, 117) eingeschraubt werden kann, aufweist.

2. Vorrichtung nach Anspruch 1, **gekennzeichnet durch** eine außerhalb der Gewindehülse (16) befestigte Klemmeinrichtung (23), die wahlweise zwischen einer ersten Stellung, in der sie eine Winkelbewegung der Regulierschraube (17, 117) bezüglich der Gewindehülse (16) zuläßt, und einer zweiten Klemmstellung, in der sie die Regulierschraube (17, 117) in Winkelrichtung an die Gewindehülse (16) klemmt, bewegt werden kann.

3. Vorrichtung nach Anspruch 1 oder 2, ferner **gekennzeichnet durch** eine mit einem Ende der Gewindehülse (16) zusammenwirkend angeordnete Röhre (21) mit einer Kante (21a), die innerhalb der Leitung (11) verläuft und in Anschlag gegen ein Dichtelement (25) gebracht werden kann, das auf der Außenseite der Gewindehülse (16) angeordnet ist, wenn die Gewindehülse (16) in eine geschlossene Stellung des Anschlusses der Ableitung (12) gebracht wird.

4. Vorrichtung nach Anspruch 3, **dadurch gekennzeichnet, daß** die Röhre (21) innen ein Dichtelement (42) aufweist, gegen das ein Endstück (16a) der Gewindehülse (16) anstößt, wenn sie in eine geschlossene Stellung des Anschlusses der Ableitung (12) gebracht wird.

5. Vorrichtung nach Anspruch 3, **dadurch gekennzeichnet, daß** die Röhre (21) radiale Öffnungen (41) zum Durchlassen des Fluids zum Anschluß der Abnahmestelle (12) aufweist.

6. Vorrichtung nach einem der vorhergehenden Ansprüche, **dadurch gekennzeichnet, daß** die Gewindehülse (16) einen axial durchgängigen Sitz (14) mit dem zweiten Gewinde (24) aufweist und wahlweise entweder eine erste Art von Regulierschraube (17), die mit einem Schraubwerkzeug zusammenwirken kann, um lediglich den zur Abnahmestelle (12) abgeleiteten Fluidstrom zu regulieren, oder eine zweite Art von Regulierschraube (117), die zum Regulieren und zum Messen des zur Abnahmestelle (12) abgeleiteten Fluids eingerichtet ist, aufnehmen kann.

7. Vorrichtung nach Anbruch 6, **dadurch gekennzeichnet, daß** die Gewindehülse (16) während des Ersetzens der ersten Art von Schraube (17) und der zweiten Art von Schraube (117) auf der Buchse (13) befestigt bleiben kann und an der Leitung (11) die vom Ersetzen der ersten Art von Schraube (17) und der zweiten Art von Schraube (117) betroffene Zone abtrennt.

8. Vorrichtung nach Anspruch 6 oder 7, **dadurch gekennzeichnet, daß** die erste Art von Regulierschraube (17) im wesentlichen zylinderförmig ist und am oberen Ende einen Aufnahmesitz (44) für ein Schraubwerkzeug aufweist.

9. Vorrichtung nach Anspruch 6 oder 7, **dadurch gekennzeichnet, daß** die zweite Art von Regulierschraube (117) einen Stößel, der in ihrem Inneren verschiebbar angeordnet ist und ein als Plättchen (31), das vom Fluidstrom betätigt wird, ausgebildetes unteres Ende und ein mit einem Anzeiger (32) versehenes oberes Ende aufweist, und eine transparente Abdeckung (20) beinhaltet, die von außerhalb der Leitung (11) betrachtet werden kann und in die sich der Anzeiger (32) des Stößels (19) hinein erstreckt und die mit einer unterteilten Skala (36) versehen ist, um den Betrag des in die Abnahmestelle (12) abgeleiteten Fluidstroms zu erfassen.

10. Vorrichtung nach einem der Ansprüche 6 bis 9, ferner **gekennzeichnet durch** ein oberes Bewegungsendelement (28), das der Gewindehülse (16) in Querrichtung zugeordnet werden kann, um mit dem durchgängigen Sitz (14) zusammenzuwirken, und die Bewegung der Regulierschrauben (17, 117) im oberen Bereich begrenzen kann.

11. Vorrichtung nach Anspruch 9, **dadurch gekennzeichnet, daß** die Regulierschraube (117) einen axialen Sitz (27), in dem der Stößel (19) gleitet, und einen außerhalb der Gewindehülse (16) angeordneten Kalibrierkopf (29) aufweist, an dem die transparente Abdeckung (20) entfernbar angeordnet ist.

12. Vorrichtung nach Anspruch 11, **dadurch gekennzeichnet, daß** der Kalibrierkopf (29) eine Außenfläche (34) aufweist, die so geformt ist, daß sie mit einem Teil der Innenfläche der wahlweisen Klemmeinrichtung (23) zusammenwirkt.

13. Vorrichtung nach Anspruch 2, **dadurch gekennzeichnet, daß** die Gewindehülse (16) in einem außerhalb der Leitung (11) angeordneten Segment von ihr eine gerillte Fläche (22) aufweist, auf der die wahlweisen Klemmeinrichtung (23) in Axialrichtung gleiten kann.

## Revendications

1. Dispositif d'interception d'un fluide, utilisé le long d'un tuyau (11) en correspondance avec un raccord d'évacuation (12) afin d'y dévier une quantité voulue de fluide, comprenant au moins :
- une bague (13) vissée sur ledit tuyau (11) ; et
- une vis de régulation (17, 117) coaxiale à ladite bague (13) ;
**caractérisé en ce qu'**il prévoit, dans position intermédiaire entre ladite bague (13) et ladite vis de régulation (17, 117), un manchon fileté (16) comprenant des trous radiaux destinés au passage du fluide, un premier filetage externe (15) qui permet de le visser sur ladite bague (13), et un second filetage interne (24), de type normalisé, qui permet d'y visser ladite vis de régulation (17, 117).

2. Dispositif selon la revendication 1, **caractérisé en ce qu'**il comprend un moyen de serrage (23) monté à l'extérieur dudit manchon fileté (16) et pouvant être déplacé sélectivement entre une première position, où il autorise le mouvement angulaire de ladite vis de régulation (17, 117) par rapport audit manchon fileté (16), et une seconde position de serrage où il serre ladite vis de régulation (17, 117) en formant un angle par rapport audit manchon fileté (16).

3. Dispositif selon la revendication 1 ou 2, **caractérisé en ce qu'**il comprend aussi un tube (21) installé en coopération avec une extrémité dudit manchon fileté (16), ledit tube (21) possédant un bord (21a) qui s'étire à l'intérieur dudit tuyau (11) et peut être placé en butée contre un élément d'étanchéité (25) installé à l'extérieur dudit manchon fileté (16) lorsque ce dernier est amené en position de fermeture du raccord d'évacuation (12).

4. Dispositif selon la revendication 3**, caractérisé en ce que** l'intérieur dudit tube (21) comprend un élément d'étanchéité (42) contre lequel l'extrémité finale (16a) dudit manchon fileté (16) fait office de butée lorsqu'il est amené en position de fermeture dudit raccord d'évacuation (12).

5. Dispositif selon la revendication 3, **caractérisé en ce que** ledit tube (21) comprend des trous radiaux (41) aptes à permettre le passage dudit fluide vers ledit raccord d'évacuation (12).

6. Dispositif selon l'une quelconque des revendications précédentes, **caractérisé en ce que** ledit manchon fileté (16) comprend dans son axe un siège traversant (14) incluant ledit second filetage (24), et peut recevoir sélectivement un premier type de vis de régulation (17), conçu pour coopérer avec un outil de vissage à seule fin de réguler l'écoulement de fluide dévié vers l'évacuation (12), ou bien un second type de vis de régulation (117), conçu pour réguler et mesurer l'écoulement de fluide dévié vers l'évacuation (12).

7. Dispositif selon la revendication 6, **caractérisé en ce que** ledit manchon fileté (16) peut rester monté sur ladite bague (13) pendant le remplacement dudit premier type de vis (17) et dudit second type de vis (117), et peut isoler le long dudit tuyau (11) la zone concernée par le remplacement dudit premier type de vis (17) et dudit second type de vis (117).

8. Dispositif selon la revendication 6 ou 7, **caractérisé en ce que** ledit premier type de vis de régulation (17) est de forme sensiblement cylindrique et comporte, au niveau d'une extrémité supérieure, un siège (44) destiné à recevoir un outil de vissage.

9. Dispositif selon la revendication 6 ou 7, **caractérisé en ce que** ledit second type de vis de régulation (117) comprend un piston installé de manière à pouvoir coulisser à l'intérieur de celle-ci et doté d'une extrémité inférieure formant un plateau (31), actionné par l'écoulement du fluide, et d'une extrémité supérieure comprenant un indicateur (32), et un couvercle transparent (20), visible de l'extérieur dudit tuyau (11), à l'intérieur duquel s'étire ledit indicateur (32) associé audit piston (19), et pourvu d'une échelle graduée (36) afin de détecter la valeur de l'écoulement de fluide dévié dans l'évacuation (12).

10. Dispositif selon l'une quelconque des revendications 6 à 9 incluse, **caractérisé en ce qu'**il comporte aussi un élément supérieur de fin de course (28) pouvant être associé transversalement audit manchon fileté (16) dans le but de coopérer avec ledit siège traversant (14), et limitant en partie haute le mouvement des vis de régulation (17, 117).

11. Dispositif selon la revendication 9, **caractérisé en ce que** ladite vis de régulation (117) comporte un siège axial (27) dans lequel coulisse ledit piston (19), et une tête de calibration (29) installée à l'extérieur dudit manchon fileté (16) et à laquelle est fixé de manière amovible ledit couvercle transparent (20).

12. Dispositif selon la revendication 11, **caractérisé en ce que** ladite tête de calibration (29) comprend une surface extérieure (34) dont la forme est conçue pour coopérer avec une partie de la surface intérieure dudit moyen de serrage sélectif (23).

13. Dispositif selon la revendication 2, **caractérisé en ce que** ledit manchon fileté (16) comporte, sur une portion se trouvant à l'extérieur dudit tuyau (11), une surface rainurée (22) sur laquelle peut coulisser axialement ledit moyen de serrage sélectif (23).
